(19) Europäisches Patentamt
European Patent Office
Office européen des brevets

(11) **EP 4 682 131 A1**

(12) **EUROPEAN PATENT APPLICATION**
published in accordance with Art. 153(4) EPC

(43) Date of publication:
21.01.2026 Bulletin 2026/04

(21) Application number: 24848738.1

(22) Date of filing: 25.06.2024

(51) International Patent Classification (IPC):
*C04B 33/13* (2006.01)   *C04B 35/626* (2006.01)
*C04B 41/86* (2006.01)

(52) Cooperative Patent Classification (CPC):
C04B 33/13; C04B 35/626; C04B 41/86

(86) International application number:
PCT/JP2024/022932

(87) International publication number:
WO 2025/028078 (06.02.2025 Gazette 2025/06)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 31.07.2023 JP 2023125002

(71) Applicant: TOTO LTD.
Kokurakita-ku
Kitakyushu-shi, Fukuoka 802-8601 (JP)

(72) Inventors:
• ARASAKI, Tomonori
Kitakyushu-shi, Fukuoka 802-8601 (JP)
• KASAHARA, Shingo
Kitakyushu-shi, Fukuoka 802-8601 (JP)
• AKASHI, Koki
Kitakyushu-shi, Fukuoka 802-8601 (JP)
• NAKAMURA, Kohei
Kitakyushu-shi, Fukuoka 802-8601 (JP)
• SAKATA, Naonori
Kitakyushu-shi, Fukuoka 802-8601 (JP)

(74) Representative: Bandpay & Greuter
11, rue Christophe Colomb
75008 Paris (FR)

(54) **POTTERY BASE MATERIAL**

(57) A ceramic greenware material excellent in various properties and characteristics is disclosed. The ceramic greenware material contains at least a plastic raw material and feldspar, wherein the feldspar containing first feldspar has an average particle size in the range of 5.0 to 20.0 $\mu$m and second feldspar has an average particle size in the range of 2.0 to 4.0 $\mu$m, the average particle size of the plastic raw material is in the range of 0.5 to 6.0 $\mu$m, where the average particle size being the arithmetic mean of the particle size and mass distribution measured by a sedimentation method. This ceramic greenware material can stably produce high-quality ceramics with complex or distinctive shapes and high design quality.

EP 4 682 131 A1

**Description**

[Technical field]

The present invention relates to a greenware material for producing a base for ceramic ware including sanitary ware, and more particularly to a greenware material capable of producing ceramic ware having a complex or unique shape.

[Background Art]

High design quality has been recently required for ceramic products such as sanitary ware, and there is a demand for greenware materials that can stably realize complex or distinctive shapes with high quality. The shape of the final ceramic product is affected not only by the deformation of the greenware material during firing, but also by the difficulty of deformation during a molding process, so there is a demand for greenware materials that can give stable and good shapes throughout an entire manufacturing process. In addition, from the viewpoint of energy efficiency, it is desirable for the greenware material to be able to be fired at a lower temperature than before. Furthermore, from the viewpoint of sourcing raw materials for greenware materials, if a good greenware material could be realized with respect to contents of raw material elements that are not limited by region, it would be advantageous for the global production of heavy ceramics.

As greenware materials for producing ceramics such as sanitary ware, for example, stone-based raw materials such as pottery stone that forms the skeleton of the ceramics, clays that impart plasticity during molding, and feldspars that act as melting agents during firing are generally crushed and mixed for use. In order to realize various performance and properties required for the greenware material, not only is the composition adjusted, but also it has been proposed to crush and mix multiple raw materials individually.

For example, CN112094100A (PLT 1) discloses that a plurality of raw materials are divided into two different groups in consideration of characteristics of each raw material, the particle size of each group is controlled, and the obtained two raw material slurries of different material types are mixed to obtain a ceramic raw material slurry. This is said to improve energy efficiency and thereby productivity. In addition, WO97/26223 (PLT 2) discloses that a raw material with small deformation due to firing can be obtained by determining the particle size of a specific raw material (quartz) while determining the average particle size of the entire raw materials.

[Citation List]

[Patent Literature]

[PTL 1] CN112094100A
[PTL 2] Publication WO97/26223

[Summary of the Invention]

We have found that by varying the degree of fineness of the same raw material, feldspar, as a fusing material in greenware materials, a pottery greenware material with excellent properties and characteristics can be obtained, and ceramics with high design quality, i.e., complex or distinctive shapes, can be stably produced with high quality . Furthermore, we have found that by controlling the relationship between the particle size of the entire greenware material and the particle size of the feldspar, a greenware material with even better properties and characteristics can be obtained. The present invention is based on these findings.

Therefore, an object of the present invention is to provide a pottery greenware material which is excellent in various properties and characteristics.

A pottery greenware material according to the present invention is a pottery greenware material comprising at least a plastic raw material and feldspar, wherein the feldspar comprises a first feldspar has an average particle size in the range of 5.0 to 20.0 $\mu$m and a second feldspar has an average particle size in the range of 2.0 to 4.0 $\mu$m, the average particle size of the plastic raw material is in the range of 0.5 to 6.0 $\mu$m where the average particle size is the arithmetic mean of particle size and mass distribution measured by a sedimentation method.

According to the present invention, a pottery greenware material having excellent properties and characteristics can be obtained, and ceramics having high design quality, i.e., complex or distinctive shapes, can be stably produced with high quality.

[DETAILED DESCRIPTION OF THE PREFERRED EMBODIMENTS]

Definition

In the present invention, a "ceramic ware" means sanitary ware, tiles, and other items that have a basic structure of a glaze layer on a ceramic base. In addition, "sanitary ware" means ceramic products used in bathrooms, toilet spaces, dressing rooms, washrooms, kitchens, etc. Specifically, it refers to toilet bowls, urinals, toilet basins, toilet tanks, wash basins, hand basins, etc.

A "pottery greenware material" according to the present invention means a composition capable of forming a base constituting the above-mentioned "ceramic ware" as a fired body.

In the present invention, an "average particle size" of particles means the arithmetic mean of particle size and mass distribution which are measured by a sedimentation method. Furthermore, it is preferable that the measurement by the sedimentation method is performed using an X-ray transmission type sedimentation method particle size distribution measuring device, SediGraph, manufactured by Micromeritics , Inc., and the measurement principle is basically the same, so differences due to the generation of the device do not change the essence of the invention in the present invention.

Pottery greenware materials

The pottery greenware material according to the present invention comprises at least a plastic raw material and feldspar. The feldspar further comprises at least a first feldspar having an average particle size in the range of 5.0 to 20.0 $\mu$m and a second feldspar having an average particle size in the range of 2.0 to 4.0 $\mu$m. Furthermore, in the pottery greenware material according to the present invention, the average particle size of the plastic raw material is in the range of 0.5 to 6.0 $\mu$m.

According to a preferred embodiment of the present invention, the average particle size of the first feldspar is preferably in the range of 6.0 to 15.0 $\mu$m, and the average particle size of the second feldspar is preferably in the range of 2.0 to 3.0 $\mu$m.

According to one embodiment of the present invention, the average particle size of the plastic raw material is preferably in the range of 0.5 to 4.0 $\mu$m.

In the pottery greenware material of the present invention, the feldspar used as the fusing material is composed of feldspars with different degrees of fineness as described above, and the average particle size of the plastic raw material is controlled within a specific range. When ceramic ware, particularly sanitary ware, is manufactured with such a pottery greenware material of the present invention, complex or distinctive shapes with rich designs can be stably realized with high quality. In order to realize such high design quality of ceramic ware, it is important not only that deformation during firing is small and the occurrence of cracks and fissures is effectively suppressed, but also that deformation during the molding process is small or easy to control. With the pottery greenware material of the present invention, the above control can be easily performed not only during firing but also during molding processing.

According to a preferred embodiment, the pottery greenware material of the present invention has a shrink aspect ratio (height/width) during firing of 1.0 to 1.9, preferably 1.0 to 1.8, resulting in less occurrence of cracks and fissures and enabling the high design quality of the ceramic to be realized.

Furthermore, the pottery greenware material according to the present invention can produce high-quality ceramics at a firing temperature which is lower than the firing temperature which is conventional and general. For example, the comparison with a greenware material which is obtained without adjusting the particle size by dividing the feldspar into the two, unlike the present invention, shows that ceramic ware having similar or better quality can be obtained even at a lower firing temperature. As a result, the use of the pottery greenware material according to the present invention is also advantageous in terms of energy efficiency of the manufacturing process. The pottery greenware material according to the present invention can be fired at a temperature of preferably 1100 to 1200°C, more preferably 1130 to 1190°C.

The effect for lowering the firing temperature of feldspar as a fusing material is ruled by its average particle size, and the firing temperature tends to decrease when the average particle size is reduced, but the occurrence of cracks was observed when the average particle size of feldspar was reduced. In the pottery greenware material of the present invention, it is considered that by adjusting the average particle size of feldspar and plastic raw material, it is possible to effectively suppress the occurrence of cracks and to fire at a relatively low temperature.

Furthermore, the control of the particle size of the feldspar and plastic raw materials in the present invention is applicable to a wide range of pottery greenware materials, and is less subject to regional restrictions in terms of raw material procurement. This is another advantage of the pottery greenware material according to the present invention.

According to a preferred embodiment of the present invention, the average particle size of all the feldspars is preferably in the range of 2.0 to 8.0 $\mu$m, more preferably in the range of 2.0 to 6.0 $\mu$m.

According to one embodiment of the present invention, the average particle size of the plastic raw material is made smaller than the average particle size of all the feldspars, which can further suppress the occurrence of cracks in the pottery.

A preferred combination of the pottery greenware material of the present invention includes a plastic raw material having an average particle size in the range of 0.5 to 6.0 $\mu$m, a first feldspar having an average particle size in the range of 5.0 to 20.0 $\mu$m, and a second feldspar having an average particle size in the range of 2.0 to 4.0 $\mu$m, and the average particle sizes of all the feldspars are in the range of 2.0 to 8.0 $\mu$m.

Furthermore, a more preferred combination includes a plastic raw material having an average particle size in the range of 0.5 to 4.0 $\mu$m, a first feldspar having an average particle size in the range of 6.0 to 10.0 $\mu$m, and a second feldspar having an average particle size in the range of 2.0 to 3.0 $\mu$m, and the average particle size of all the feldspars is in the range of 2.0 to 6.0 $\mu$m.

In the present invention, the mixing ratio of the first feldspar to the second feldspar may be appropriately determined taking into consideration the average particle sizes of all of the feldspars described above, but it is preferable that the mixing ratio of the first feldspar is greater than the mixing ratio of the second feldspar.

Raw materials

Examples of the plastic raw materials contained in the pottery greenware material according to the present invention include clay minerals such as kaolinite, halloysite, metahalloysite, dickite, and pyrophyllite, and clay-like micas such as sericite and illite. These minerals are abundantly contained in clay raw materials such as frog-eye clay, kibushi clay, kaolin, ball clay, and china clay, and in various pottery stones. Kaolinite, halloysite, and sericite are preferred as these clays. These clay minerals melt during firing to form a glass phase, but some may remain unmelted as crystals. According to one embodiment, the pottery greenware material according to the present invention may contain pottery stone. For example, sericite pottery stone, kaolin pottery stone, etc. can be used as the pottery stone.

The feldspar contained in the pottery greenware material according to the present invention may include feldspar minerals such as potassium feldspar, sodalite, and anorthite, nephelite, natural glass, frit, and the like.

The pottery greenware material according to the present invention can be made mainly from stone-based raw materials, such as pottery stone, feldspar, dolomite, etc. Dolomite can lower the firing temperature, which reduces energy costs and allows for economical production of pottery products, and is suitable for industrial and mass production.

Manufacturing of pottery greenware materials

The pottery greenware material according to the present invention can be produced by grinding and mixing the raw materials above. Specifically, the plastic raw material, the first feldspar, and the second feldspar are each ground to particles having a desired average particle size, and then mixed in a mixing ratio that results in a desired composition. The desired average particle size may be controlled by the grinding condition time, or may be performed using a classifier such as a sieve. As a classification method, known methods using a vibrating sieve, an ultrasonic sieve, various screeners, a centrifuge, etc. can be used.

As the grainding method, a known method using a ball mill, a planetary ball mill, a jet mill, or the like can be used.

Composition of the substrate material

The pottery greenware material according to the present invention preferably has as an overall chemical composition at the time of firing 50-75 wt% of $SiO_2$, 17-40 wt% of $Al_2O_3$, and 1-10 wt% of $K_2O+Na_2O$. The first greenware material preferably contains 25-70 wt% of glass phase and 75-30 wt% of crystal phase. The chemical composition of the main components constituting the glass phase is preferably 50-80 wt% of $SiO_2$, 10-40 wt% of $Al_2O_3$, and 4-12 wt % of KO+NaO, with the entire glass phase being 100 % .

Manufacturing of greenware material

The production of pottery greenware from the pottery greenware material according to the present invention can be carried out as follows. First, the pottery greenware material according to the present invention is mixed with water to prepare a greenware slurry. The greenware slurry is adjusted by its concentration and, in some cases, the amount of a deflocculating agent, etc., so that the viscosity of the greenware slurry is preferably about 100 to 1000 cP, which is suitable for slip casting. The deflocculating agent is a material that makes the greenware material easy to disperse in water, and water glass, sodium carbonate, sodium humate, sodium polyacrylate, acrylic acid oligomer ammonium salt, etc. can be used. In addition, when strength of the molded body is particularly required, a binder can be added to the slurry, and binders such as various emulsion-based binders, sodium carboxymethylcellulose, polyvinyl alcohol, dextrin, gum arabic, gum tragacanth, methylcellulose, peptone, water-soluble starch, and colloidal silica can be used.

Then, the greenware slurry is molded into a molded body. For example, in the case of a toilet bowl, the greenware slurry is molded into molded bodies for the body and rim of the toilet bowl. As a molding method, for example, casting is used. As casting, gypsum casting and pressure casting are preferable. The molded bodies thus obtained are optionally joined. As a method of joining, a plurality of molded bodies are joined using an adhesive slip. For example, in the case of a toilet bowl, the molded bodies for the body and rim are joined using an adhesive slip.

Next, the joined molded body is dried. A glaze slip prepared separately is applied onto the molded body to form a glaze layer, and then the molded body is fired. The firing is preferably performed at a temperature of 1100 to 1200°C, and more preferably at a temperature of 1130 to 1190°C.

Glaze

In the present invention, various glazes can be used as a glaze for forming a glaze layer of the ceramic ware. For example, a mixture of natural mineral particles such as silica sand, feldspar, limestone, etc. and/or amorphous glaze containing an opacifier and further adding a pigment can be used. Examples of opacifiers include zircon and tin oxide. The composition of the glaze is, for example, $SiO_2$: 52 to 80 parts by weight, $Al_2O_3$: 5 to 14 parts by weight, CaO: 6 to 17 parts by weight, MgO: 0.5 to 4.0 parts by weight, ZnO: 3 to 11 parts by weight, $K_2O$: 1 to 5 parts by weight, $Na_2O$: 0.5 to 2.5 parts by weight, an opacifier: 0.1 to 15 parts by weight, a pigment: 0.001 to 20 parts by weight. The glaze may further contain a paste, a dispersant, a preservative, an antibacterial agent, etc. Examples of pigments include cobalt compounds and iron compounds. The amorphous glaze refers to a glaze obtained by melting a glaze raw material consisting of a mixture of the above-mentioned natural mineral particles at a high temperature and vitrifying it, and for example, a frit glaze can be suitably used.

[EXAMPLES]

The present invention will be further illustrated by the following examples, but the present invention is not limited to these examples.

Measurement of average particle size

The average particle size of the greenware materials in the following Examples and Comparative Examples was measured using a Micromeritics SediGraph (SediGraphIII 5120). The measurement conditions were as follows: a sample was dispersed in an aqueous hexametaphosphoric acid solution (0.05%) at a weight concentration of 6.1%, the measurement range was 250μm to 0.1μm, and the analysis time was 58 minutes.

Raw material grinding

As greenware materials, pottery stone, China clay, ball clay, feldspar, silica sand, and dolomite were prepared. A portion of the feldspar was further pulverized in a ball mill to obtain first feldspar A to C and second feldspar A and B. The particle sizes of these raw materials were as shown in Table 1 below.

Table 1

|  | Average particle size (μm) |
| --- | --- |
| Pottery stone | 2.6 |
| China clay | 2.6 |
| Ball clay | 0.4 |
| 1st feldspar A | 7.6 |
| 1st feldspar B | 9.0 |
| 1st feldspar C | 17.8 |
| 2nd feldspar A | 2.4 |
| 2nd feldspar B | 2.1 |
| Silica sand | 6.4 |
| Dolomite | 2.5 |

## Mixing of raw materials: Preparation of pottery greenware material

The raw materials prepared as described above were mixed in the ratio shown in Table 2 below to obtain pottery greenware materials as Examples 1 to 5 and Comparative Examples 1 to 6.

Table 2

| | | Ratio of materials (%) | | | | | | | | | | |
|---|---|---|---|---|---|---|---|---|---|---|---|---|
| | | Com-Ex 1 | Com-Ex 2 | Com-Ex 3 | Ex 1 | Ex 2 | Ex 3 | Ex 4 | Ex 5 | Com-Ex 4 | Com-Ex 5 | Com-Ex 6 |
| Plastic raw material | Pottery stone | 0.0 | 0.0 | 0.0 | 0.0 | 20.0 | 10.0 | 30.0 | 20.0 | 20.0 | 10.0 | 30.0 |
| | China clay | 33.6 | 33.0 | 33.0 | 33.0 | 26.0 | 29.5 | 22.5 | 26.0 | 26.0 | 29.5 | 22.5 |
| | Ball clay | 23.5 | 23.5 | 23.5 | 23.5 | 23.5 | 23.5 | 23.5 | 23.5 | 23.5 | 23.5 | 23.5 |
| Feldspar | 1st feldspar A | 0.0 | 19.5 | 0.0 | 9.8 | 11.5 | 11.5 | 11.5 | 0.0 | 0.0 | 0.0 | 0.0 |
| | 1st feldspar B | 22.0 | 0.0 | 0.0 | 0.0 | 0.0 | 0.0 | 0.0 | 0.0 | 0.0 | 0.0 | 0.0 |
| | 1st feldspar C | 0.0 | 0.0 | 0.0 | 0.0 | 0.0 | 0.0 | 0.0 | 4.2 | 0.0 | 0.0 | 0.0 |
| | 2nd feldspar A | 0.0 | 0.0 | 19.5 | 9.8 | 8.0 | 8.0 | 8.0 | 0.0 | 19.5 | 19.5 | 19.5 |
| | 2nd feldspar B | 0.0 | 0.0 | 0.0 | 0.0 | 0.0 | 0.0 | 0.0 | 15.3 | 0.0 | 0.0 | 0.0 |
| Others | Silica sand | 20.9 | 23.0 | 23.0 | 23.0 | 10.0 | 16.5 | 3.5 | 10.0 | 10.0 | 16.5 | 3.5 |
| | Dolomite | 0.0 | 1.0 | 1.0 | 1.0 | 1.0 | 1.0 | 1.0 | 1.0 | 1.0 | 1.0 | 1.0 |
| Total | | 100.0 | 100.0 | 100.0 | 100.0 | 100.0 | 100.0 | 100.0 | 100.0 | 100.0 | 100.0 | 100.0 |
| Ratio of | Plastic raw material (%) | 57.1 | 56.5 | 56.5 | 56.5 | 69.5 | 63.0 | 76.0 | 76.0 | 69.5 | 63.0 | 76.0 |
| | Feldspar(%) | 22.0 | 19.5 | 19.5 | 19.5 | 19.5 | 19.5 | 19.5 | 19.5 | 19.5 | 19.5 | 19.5 |

The average particle size of each raw material of the pottery greenware materials in these Examples and Comparative Examples is summarized in Table 3 below.

Table 3

| | Com. Ex. 1 | Com. Ex. 2 | Com. Ex. 3 | Ex. 1 | Ex. 2 | Ex. 3 | Ex. 4 | Ex. 5 | Com. Ex. 4 | Com. Ex. 5 | Com. Ex. 6 |
|---|---|---|---|---|---|---|---|---|---|---|---|
| Greenware materials in total | 3.9 | 3.9 | 2.8 | 3.4 | 3.0 | 3.2 | 2.8 | 3.0 | 2.4 | 2.6 | 2.2 |
| Plastic raw materials | 1.0 | 1.6 | 1.6 | 1.6 | 1.9 | 1.7 | 2.0 | 1.9 | 1.9 | 1.7 | 2.0 |
| 1st feldspar | 9.0 | 7.6 | n.a. | 7.6 | 7.6 | 7.6 | 7.6 | 17.8 | n.a. | n.a. | n.a. |
| 2nd feldspar | n.a. | n.a. | 2.4 | 2.4 | 2.4 | 2.4 | 2.4 | 2.1 | 2.4 | 2.4 | 2.4 |
| feldspar in total | 9.0 | 7.6 | 2.4 | 5.0 | 5.5 | 5.5 | 5.5 | 5.5 | 2.4 | 2.4 | 2.4 |

Preparation of greenware slurry, greenware materials and ceramic ware

To the greenware materials of the examples and comparative examples water was added, and the mixture was stirred to prepare a greenware slurry. This greenware slurry was cast into a plaster mold to obtain a molded body. Then, the molded body was spray-coated with glaze, and the firing temperature was set to the temperature shown in Table 4 below, and the ceramic ware was obtained by firing for 18 hours.

Evaluation

The pottery greenware material according to the present invention, the greenware and ceramics obtained therefrom were evaluated as follows.

Greenware thickness

In order to evaluate the adhesion properties of the greenware slurry, the thickness of the greenware slurry after pressure filtration was measured. In particular, a filter paper was laid on the bottom plate of a container, and 300 ml of the greenware slurry was poured from the injection port. The injection port was plugged, and the greenware slurry was inlaid by filtering the container with an air pressure of 294 kPa for 20 minutes. After the pressurization was completed, the air pressure in the container was released, and the mud was drained from the injection port, and then the injection port was plugged again and the greenware slurry was compacted with an air pressure of 196 kPa for 5 minutes. The greenware slurry was taken out of the container, and the thickness was measured, and the obtained value was taken as the baroid thickness (mm/20 min).

Particle Packing Ratio

The particle packing ratio was calculated from the bulk density and true density obtained by the Archimedes method. In particular, a molded body without irregularities was obtained by slip casting using the greenware slurry obtained in the same manner as in the preparation of the greenware slurry. The molded body was thoroughly dried and the dry mass (W1) was measured. Next, the molded body was placed in a vacuum desiccator and kept in vacuum for 1 hour, and then, without lowering the vacuum, kerosene was added to the desiccator until the molded body was completely immersed, and the sample was suspended in the oil by a thin wire and the mass in the oil (W2) was measured. Next, the excess oil on the surface of the sample was wiped off with gauze, and the oil-containing mass in the air (W3) was measured. The bulk density ($\rho$b), true specific gravity ($\rho$), and particle packing ratio were calculated from the following formulas.

$$\text{Bulk density } (\rho b) = (\rho 0 \times W1) / (W3 - W2)$$

$$\text{True specific gravity } (\rho) = (\rho 0 \times W1) / (W1 - W2)$$

$$\text{Particle filling rate } (\%) = (\rho b / \rho) \times 100$$

**In** the above, $\rho$0 is the specific gravity of kerosene.

Firing shrinkage

Using a greenware slurry obtained in the same manner in the preparation of the greenware slurry above, a molded body having a width of 30 mm, a thickness of 12 mm, and a length of 260 mm was obtained by slip casting, and this was used as a test piece. A mark was made at a length of 150 mm on the test piece, and the test piece was fired. The percentage obtained by dividing the change in the length of the mark before and after firing by 150 mm was calculated as the firing shrinkage rate.

Firing aspect ratio

According to the following formula, the ratio of the vertical shrinkage to the horizontal shrinkage during firing was defined as the firing aspect ratio, and the horizontal shrinkage rate and the vertical shrinkage rate were calculated as follows.

Firing aspect ratio = Vertical shrinkage rate (when fired) (%) / Horizontal shrinkage rate (when fired) (%)

- - Horizontal shrinkage rate: The same as the "firing shrinkage" above, and the value obtained above was used.

- - Vertical shrinkage rate: A cylindrical molded body having a thickness of 12 mm and a diameter of 96 mm was obtained from the above greenware slurry, and this was used as a test piece. The dried test piece was fired, and its thickness was measured at six points before and after firing using a micrometer. The measurement points were the same before and after firing. The average value of the six measured values was calculated and used as the vertical shrinkage.

Softening deformation amount

Using a greenware slurry obtained in the same manner as in the preparation of the greenware slurry above, a molded body having a width of 30 mm, a thickness of 12 mm, and a length of 260 mm was obtained by slip casting, and this was used as a test piece. The test piece was sintered while being supported by a support with a span of 200 mm. The deflection amount and the thickness of the test piece after sintering were measured. Since the deflection amount is inversely proportional to the square of the thickness of the test piece after firing, the deflection amount at a thickness of 10 mm was calculated by the following formula, and this was used as the softening deformation amount.

Softening deformation amount = measured deflection amount $\times$ (thickness of test piece after firing) $^2/10^2$

Cracks in round bars

Using a greenware slurry obtained in the same manner as in the preparation of the greenware slurry above, a cylindrical molded body having a diameter of 14 mm and a length of 160 mm was obtained by slip casting, which was used as a test piece. After firing the test piece, the state of cracks that had occurred was visually observed and rated on a 5-point scale (none, almost none, slightly present, present, severely present). For the inside of the test piece that could not be visually observed from the outside, the test piece was split and the state of cracks was visually observed.

The results are shown in Table 4 below.

Table 4

| | Com. Ex. 1 | Com. Ex. 2 | Com. Ex. 3 | Ex. 1 | Ex. 2 | Ex. 3 | Ex. 4 | Ex. 5 | Com. Ex. 4 | Com. Ex. 5 | Com. Ex. 6 |
|---|---|---|---|---|---|---|---|---|---|---|---|
| Greenware thickness (mm/20min) | 5.1 | 6.7 | 6.0 | 6.3 | 7.0 | 7.3 | 7.5 | 6.3 | 6.4 | 6.2 | 6.6 |
| Particle Packing Ratio (%) | 70.3 | 68.8 | 68.1 | 68.5 | 68.6 | 68.3 | 68.4 | 68.3 | 68.1 | 68.3 | 68.0 |
| Firing shrinkage (%) | 7.7 | 8.7 | 8.5 | 8.5 | 8.9 | 8.8 | 9.0 | 9.2 | 9.0 | 8.9 | 9.2 |
| Firing aspect ratio | 1.82 | 1.68 | 1.91 | 1.87 | 1.60 | 1.62 | 1.55 | 1.78 | 1.70 | 1.73 | 1.64 |
| Softening deformation amount (mm) | 15.9 | 19.3 | 15.8 | 17.6 | 15.9 | 16.2 | 15.4 | 18.1 | 16.5 | 15.9 | 15.1 |
| Firing tepmerateure (°C) | 1202 | 1191 | 1165 | 1190 | 1183 | 1181 | 1181 | 1177 | 1181 | 1182 | 1181 |
| Cracks in round bars | none | none | severely present | present | slightly present | slightly present | almost none | slightly present | severely present | severely present | severely present |

**Claims**

1.  A pottery greenware material comprising at least a plastic raw material and feldspar,

    wherein the feldspar comprises a first feldspar has an average particle size in the range of 5.0 to 20.0 $\mu$m and a second feldspar has an average particle size in the range of 2.0 to 4.0 $\mu$m;
    the average particle size of the plastic raw material is in the range of 0.5 to 6.0 $\mu$m,
    where the average particle size is an arithmetic average of particle size and mass distribution measured by a sedimentation method.

2.  The pottery greenware material according to claim 1, wherein the average particle size of all of the feldspars is in the range of 2.0 to 8.0 $\mu$m.

3.  The pottery greenware material according to claim 1, wherein the average particle size of all of the feldspars is in the range of 2.0 to 6.0 $\mu$m.

4.  The pottery greenware material according to any one of claims 1 to 3, wherein the average particle size of the second feldspar is in the range of 2.0 to 3.0 $\mu$m.

5.  The pottery greenware material according to any one of claims 1 to 4, wherein the average particle size of the plastic raw material is in the range of 0.5 to 4.0 $\mu$m.

6.  The pottery greenware material according to any one of claims 1 to 5, wherein the average particle size of the plastic raw material is smaller than the average particle size of all of the feldspars.

7.  The pottery greenware material according to any one of claims 1 to 6, wherein the blending ratio of said first feldspar is greater than the blending ratio of said second feldspar.

8.  The pottery greenware material according to any one of claims 1 to 7, wherein the shrink aspect ratio (height / width) during firing is in the range of 1.0 to 1.9.

9.  The pottery greenware material according to any one of claims 1 to 8, wherein the second feldspar is pulverized by a ball mill.

10. A ceramic ware obtained by firing the pottery greenware material according to any one of claims 1 to 9.

11. A sanitary ware obtained by firing the pottery greenware material according to any one of claims 1 to 9.

## INTERNATIONAL SEARCH REPORT

| International application No. |
| --- |
| **PCT/JP2024/022932** |

| | |
| --- | --- |
| **A.** | **CLASSIFICATION OF SUBJECT MATTER** |

*C04B 33/13*(2006.01)i; *C04B 35/626*(2006.01)i; *C04B 41/86*(2006.01)i
FI:    C04B33/13 Z; C04B35/626 050; C04B41/86 R

According to International Patent Classification (IPC) or to both national classification and IPC

| | |
| --- | --- |
| **B.** | **FIELDS SEARCHED** |

Minimum documentation searched (classification system followed by classification symbols)

C04B33/13; C04B35/626; C04B41/86

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| | |
| --- | --- |
| **C.** | **DOCUMENTS CONSIDERED TO BE RELEVANT** |

| Category* | Citation of document, with indication, where appropriate, of the relevant passages | Relevant to claim No. |
| --- | --- | --- |
| X | JP 6-056516 A (TOTO LTD.) 01 March 1994 (1994-03-01)<br>paragraphs [0010], [0051]-[0055], table 1, example 2 | 1-11 |
| A | JP 2023-049464 A (TOTO LTD.) 10 April 2023 (2023-04-10)<br>entire text, all drawings | 1-11 |
| A | JP 4-097943 A (TOTO LTD.) 30 March 1992 (1992-03-30)<br>entire text, all drawings | 1-11 |
| A | JP 2014-065640 A (TOTO LTD.) 17 April 2014 (2014-04-17)<br>entire text, all drawings | 1-11 |
| A | WO 2009/123345 A1 (TOTO LTD.) 08 October 2009 (2009-10-08)<br>entire text, all drawings | 1-11 |
| A | JP 2007-269622 A (INAX CORP) 18 October 2007 (2007-10-18)<br>entire text, all drawings | 1-11 |

☑ Further documents are listed in the continuation of Box C.     ☑ See patent family annex.

| | |
| --- | --- |
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **15 August 2024** | **27 August 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT

International application No.

**PCT/JP2024/022932**

### C. DOCUMENTS CONSIDERED TO BE RELEVANT

| Category* | Citation of document, with indication, where appropriate, of the relevant passages | Relevant to claim No. |
|---|---|---|
| A | JP 2001-287981 A (TOTO LTD.) 16 October 2001 (2001-10-16)<br>entire text, all drawings | 1-11 |

### INTERNATIONAL SEARCH REPORT
Information on patent family members

International application No.

**PCT/JP2024/022932**

| Patent document cited in search report | | | Publication date (day/month/year) | Patent family member(s) | | | Publication date (day/month/year) |
|---|---|---|---|---|---|---|---|
| JP | 6-056516 | A | 01 March 1994 | US | 5372976 | A | |
| | | | | column 3, lines 48-52, table 1 | | | |
| | | | | CN | 1089243 | A | |
| JP | 2023-049464 | A | 10 April 2023 | US | 2023/0110260 | A1 | |
| | | | | entire text, all drawings | | | |
| | | | | EP | 4159702 | A1 | |
| | | | | CN | 115872723 | A | |
| JP | 4-097943 | A | 30 March 1992 | (Family: none) | | | |
| JP | 2014-065640 | A | 17 April 2014 | (Family: none) | | | |
| WO | 2009/123345 | A1 | 08 October 2009 | JP | 2011-116568 | A | |
| | | | | entire text, all drawings | | | |
| JP | 2007-269622 | A | 18 October 2007 | (Family: none) | | | |
| JP | 2001-287981 | A | 16 October 2001 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 112094100 A

- WO 9726223 A